# EUROPEAN PATENT APPLICATION

(11) **EP 4 772 373 A1**
(43) Date of publication of application: **08.07.2026**
(21) Application number: 25193315.6
(22) Date of filing: 01.08.2025
(51) Int. Cl.: B60K 1/04

(54) **BATTERY PACK BRACKET, BRACKET ASSEMBLY AND VEHICLE**

(30) Priority: 06.01.2025 CN 202520029988 U; 06.01.2025 CN 202510021848; 21.02.2025 WO PCT/CN2025/078568
(71) Applicant: Eve Energy Co., Ltd., Huizhou, Guangdong 516006 (CN)
(72) Inventor: HUANG, Liliang, Huizhou, Guangdong, 516006 (CN); CHEN, Zhiwei, Huizhou, Guangdong, 516006 (CN); CHEN, Chaohai, Huizhou, Guangdong, 516006 (CN)
(74) Representative: Berggren Oy

(57) **Abstract**

A battery pack bracket (100), a bracket assembly (10) and a vehicle (1) are provided herein. The vehicle includes a bracket assembly (10); the bracket assembly (10) includes a battery pack bracket (100). The battery pack bracket (10) includes: a supporting platform (100a) and at least two cantilever beams (110). The supporting platform (100a) is configured to install the battery pack; at least two cantilever beams (110) are disposed at intervals on both sides of the supporting platform (100a) along a first direction; a width of at least part of the cantilever beam (110) gradually decreases in a direction away from the connecting structure; the cantilever beam (110) includes a bottom plate (110a) and two side plates (110b), and a plurality of connecting bodies (110c) are connected between the two side plates (110b).

## Description

### TECHNICAL FIELD

The present application relates to the field of bracket technology, and specifically relates to a battery pack bracket, a bracket assembly and a vehicle.

### BACKGROUND

In the field of battery pack installation, a battery pack bracket is often used to achieve installation of the battery pack. The battery pack bracket is generally a cage type structure, which adopts multiple rectangular pipes welded together to achieve the desired structural strength.

### SUMMARY

The present application provides a battery pack bracket that can balance structural strength and installation convenience.

In a first aspect, the present application provides a battery pack bracket. The battery pack bracket includes:
a supporting platform, configured to install a battery pack; and
at least two cantilever beams, disposed at intervals on both sides of the supporting platform along a first direction.

The supporting platform is fixedly connected to the two cantilever beams respectively; an end of each of the two cantilever beams has a connecting structure for being connected to an external structure; the width of at least part of the cantilever beam in the second direction gradually decreases in a direction away from the connecting structure.

Each of the two cantilever beams includes a bottom plate and two side plates, the bottom plate extends along a third direction, the two side plates are fixedly connected to two sides of the bottom plate in a first direction respectively, and a plurality of connecting bodies are connected between the two side plates.

In a second aspect, the present application also provides a bracket assembly. The bracket assembly includes a plurality of battery pack brackets as described above.

Each of the plurality of battery pack brackets is disposed to stack along the second direction.

In a third aspect, the present application further provides a vehicle. The battery module comprises a vehicle frame and the above-described bracket assembly. The bracket assembly is mounted to the vehicle frame.

As for the bracket assembly provided in the present application, the bracket assembly is formed by stacking and disposing a plurality of battery pack brackets, which can take into account both structural strength and installation convenience.

The vehicle provided in the present application adopts the above-mentioned bracket assembly to mount the battery pack to the vehicle frame, which can take into account both structural strength and installation convenience.

### BRIEF DESCRIPTION OF THE DRAWINGS

FIG.1 is a perspective schematic diagram of a battery pack bracket provided in an embodiment of the present application.
FIG. 2 is an enlarged schematic diagram of part A in FIG. 1.
FIG. 3 is a top view of the battery pack bracket provided in an embodiment of the present application.
FIG. 4 is an enlarged schematic diagram of part B in FIG. 3.
FIG. 5 is a side view of the battery pack bracket provided in an embodiment of the present application.
FIG. 6 is an enlarged schematic diagram of part C in FIG. 5.
FIG. 7 is a three-dimensional schematic diagram of a cantilever beam in a battery pack bracket provided in an embodiment of the present application.
FIG. 8 is a top view of the cantilever beam in the battery pack bracket provided in an embodiment of the present application.
FIG. 9 is a schematic diagram of an assembly process of the bracket assembly provided in an embodiment of the present application.
FIG. 10 is schematic diagram of another assembly process of the bracket assembly provided in an embodiment of the present application.
FIG. 11 is schematic diagram of another assembly process of the bracket assembly provided in an embodiment of the present application.
FIG. 12 is an enlarged schematic diagram of part D in FIG. 11.
FIG. 13 is schematic diagram of another assembly process of the bracket assembly provided in an embodiment of the present application.
FIG. 14 is a three-dimensional schematic diagram of a vehicle frame and a bracket assembly in a vehicle provided in an embodiment of the present application.

### DETAILED DESCRIPTION

### Embodiment 1

Due to a complexity of the cage type structure of the battery pack bracket, the operating space during battery pack installation is limited, resulting in a low installation efficiency. The relevant technology does not provide a solution that takes into account both structural strength and installation convenience.

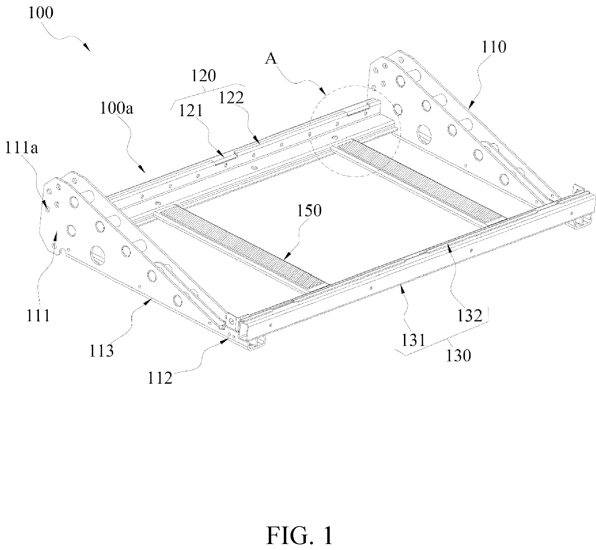

This embodiment provides a battery pack bracket 100. Referring to FIG. 1, FIG. 5 to FIG. 8, the battery pack bracket 100 includes a supporting platform 100a and a cantilever beam 110.

The supporting platform 100a is configured to install the battery pack 200; at least two cantilever beams 110 are provided, and the two cantilever beams 110 are disposed at interval along the first direction on both sides of the supporting platform 100a, and the supporting platform 100a is fixedly connected to the two cantilever beams 110 respectively, and the supporting platform 100a is supported by the cantilever beams 110, and the structure is simplified.

Here, the first direction indicates the left-right direction only for the convenience of introducing the specific embodiments of the present application. There is no absolute correspondence between the first direction and the left-right direction. Similarly, there is no absolute correspondence between the second direction and the up-down direction, the third direction and the front-back direction. Moreover, the first direction, the second direction, and the third direction of the present application are only for expressing relative positional relationships. They only indicate approximate directions, rather than absolute geometric relationships.

In some embodiments of the present application, referring to FIG. 1 and FIG. 5 to FIG. 8, an end of each of the cantilever beams 110 has a connecting structure for being connected to an external structure; the width of at least part of the cantilever beam 110 in the second direction gradually decreases in a direction away from the connecting structure.

It can be understood that the connecting structure and the external structure may be connected by the manners such as bolt connecting, welding.

The width of at least part of the cantilever beam 110 in the second direction may be continuously reduced, for example, the slope of the top surface of the cantilever beam 110 is consistent; or the width of at least part of the cantilever beam 110 in the second direction may be varied in multiple stages, for example, the top surface of the cantilever beam 110 has multiple different slopes.

The cantilever beam 110 may include a bottom plate 110a and two side plates 110b. The bottom plate 110a extends along a third direction. The two side plates 110b are fixedly connected to both sides of the bottom plate 110a in the first direction respectively, and a plurality of connecting bodies 110c are connected between the two side plates 110b so that the two side plates 110b are maintained in a predetermined state.

It can be understood that the two side plates 110b form an open aperture on the side away from the bottom plate 110a, and the arrangement of the connecting body 110c can effectively ensure that the size of the aperture is consistent and improve the strength near the aperture.

In the embodiment of the present application, the main body of the battery pack bracket 100 is constituted by a supporting platform 100a and two cantilever beams 110, and the operable space when installing the battery pack 200 is increased by gradually reducing the width of at least part of the cantilever beam 110 in the second direction in the direction away from the connecting structure; on the basis of setting the width of the above cantilever beam 110 to facilitate the installation of the battery pack 200, each of the cantilever beams 110 includes a bottom plate 110a and two side plates 110b, and a plurality of connecting bodies 110c are connected between the two side plates 110b. The adoption of such structure of the cantilever beam 110 can improve the structural strength of the cantilever beam 110 and ensure the stability of the battery pack 200. Therefore, the battery pack bracket 100 provided by the present application can take into account both structural strength and installation convenience.

In some possible embodiments, the side plates 110b and the bottom plate 110a may be made by the manner such as bending or welding the plate materials. The side plates 110b and the bottom plate 110a adopt high-strength steel plates (for example, 780DP), and the thickness thereof ranges from 5.0 mm to 10.0 mm.

In some possible embodiments, the connecting body 110c may adopt the structures such as a tubular or a columnar shape.

In some embodiments of the present application, referring to FIG. 1 and FIG. 5 to FIG. 8, each of the cantilever beams 110 includes: an installation portion 111, a support portion 112, and a transition portion 113.

The installation portion 111 is provided with the above-mentioned connecting structure, and the installation portion 111 is fixedly connected to the first side of the supporting platform 100a; the installation portion 111 includes two side plates 110b, that is, a space penetrating from top to bottom is formed between the two side plates 110b corresponding to the installation portion 111, so as to facilitate the connection between the installation portion 111 and the external structure.

The support portion 112 is fixedly connected to the second side of the supporting platform 100a; the transition portion 113 is connected between the installation portion 111 and the support portion 112; both the support portion 112 and the adaptor portion 113 includes a bottom plate 110a and two side plates 110b, and the width of the transition portion 113 in the second direction gradually decreases in the direction away from the installation portion 111. That is, the width of the installation portion 111 in the second direction is greater than the width of the support portion 112 in the second direction, so that the portions at the left and right sides and the front side of the battery pack bracket 100 are respectively in no structural shielding, which is convenient for the placement and fixation of the battery pack 200.

In some possible embodiments, the connecting body 110c may be disposed between the two side plates 110b corresponding to the transition portion 113. Of course, on the premise that the size of the support portion 112 is sufficient, the connecting body 110c may also be disposed on the support portion 112.

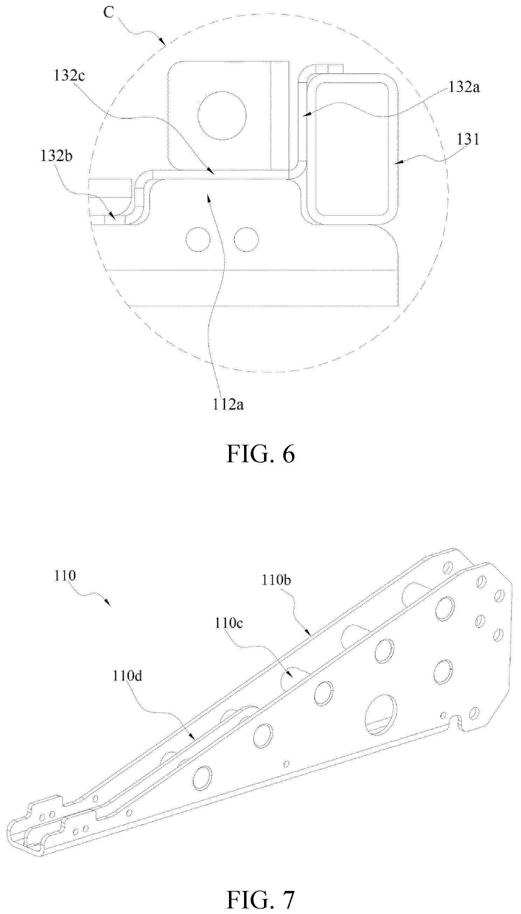

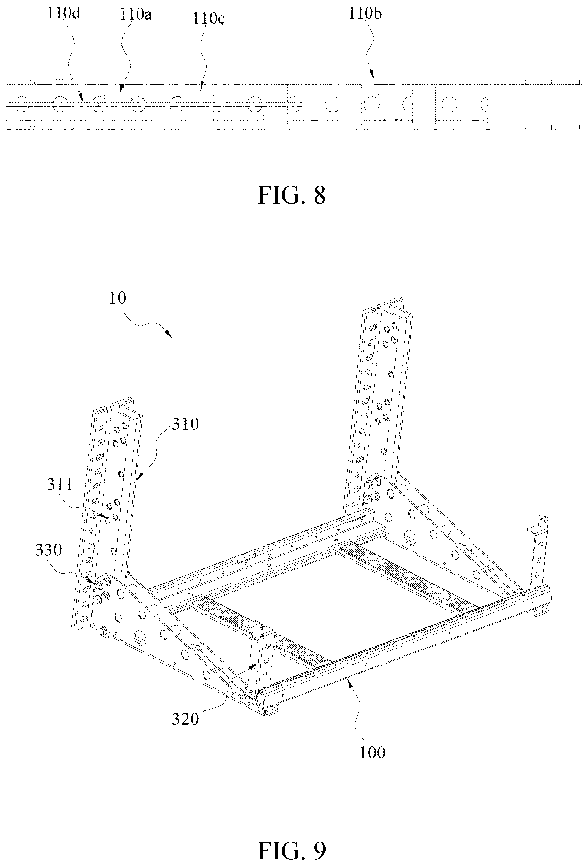

In some embodiments of the present application, referring to FIG. 7 and FIG. 8, the cantilever beam 110 further includes a reinforcing rib 110d. The reinforcing rib 110d extends from the transition portion 113 to the support portion 112, and the reinforcing rib 110d is fixedly connected to the bottom plate 110a.

By the arrangement of the reinforcing rib 110d, the strength lost due to the reduction in the width of the cantilever beam 110 in the second direction can be compensated, thereby improving the stability of the battery pack bracket 100.

In some possible embodiments, since the width of the transition portion 113 in the second direction tends to decrease as it approaches the support portion 112, a reinforcing rib 110d is provided at the portion of the transition portion 113 close to the support portion 112. In addition, since the width of the support portion 112 in the second direction is the smallest, the entire support portion 112 is provided with a reinforcing rib 110d to help improve the structural strength of the support portion 112.

In some embodiments of the present application, the reinforcing rib 110d is disposed between the two side plates 110b, and at least part of the connecting body 110c penetrates through the reinforcing rib 110d.

It can be understood that the reinforcing rib 110d is parallel to the side plates 110b on both sides, so that the connecting body 110c is vertically penetrated through the reinforcing rib 110d.

Through the cooperation between the connecting body 110c and the reinforcing rib 110d, the structural strength of the cantilever beam 110 is further improved, and the stability of the cantilever beam 110 is improved.

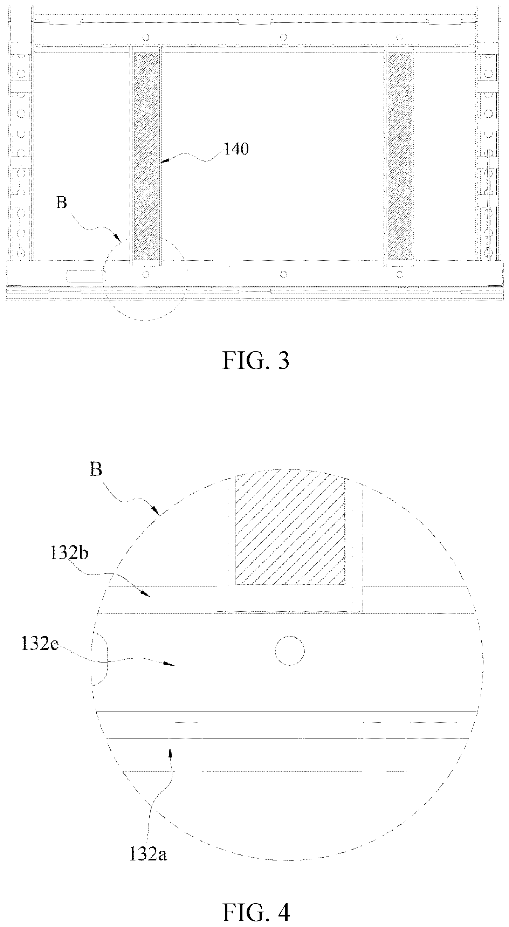

In some embodiments of the present application, referring to FIG. 1 to FIG. 5, the supporting platform 100a includes: a first cross beam 120, a second cross beam 130 and a pull beam 140.

The first cross beam 120 is fixedly connected to the installation portion 111 of the two cantilever beams 110 respectively; the second cross beam 130 is fixedly connected to the support portion 112 of the two cantilever beams 110 respectively; by the arrangement of the first cross beam 120 and the second cross beam 130the two cantilever beams 110 are connected into an integral body.

There are disposed the plurality of pull beams 140, which are configured to provide a support surface 141 for supporting the battery pack 200, and the plurality of pull beams 140 are disposed at intervals along the first direction. The first end of each of the pull beams 140 is fixedly connected to the first cross beam 120, and the second end of each of the pull beams 140 is fixedly connected to the second cross beam 130.

By arrangement of the first cross beam 120, the installation portion 111 of the two cantilever beams 110 is connected, which can improve the strength of the installation portion 111 when connected to the external structure. By arrangement of the second cross beam 130, it may not only be connected to the support portion 112 of the two cantilever beams 110 to improve the stability of the support portion 112, but also effectively prevent the battery pack 200 from side collision and extrusion.

In some embodiments of the present application, referring to FIG. 1 to FIG. 5, the first cross beam 120 includes a load-bearing pipe member 121 and a connecting member 122. The load-bearing pipe member 121 is connected between the installation portion 111 of the two cantilever beams 110; the connecting member 122 has a first connecting portion 122a connected to the load-bearing pipe member 121 and a second connecting portion 122b connected to each of the pull beams 140.

It is understandable that the load-bearing pipe member 121 may be a rectangular pipe, which can withstand a large load. However, it is not conducive to the connecting with the pull beam 140. If each of the pull beams 140 is directly welded to the load-bearing pipe member 121, additional tooling is required to assist in positioning the two members, and the assembly efficiency is low.

Based on the above considerations, by providing a connecting member 122 having a first connecting portion 122a and a second connecting portion 122b respectively adapted to be positioned with the load-bearing pipe member 121 and the pull beam 140, the assembly efficiency of the pull beam 140 and the first cross beam 120 is improved thereby.

In some embodiments of the present application, referring to FIG. 1 to FIG. 5, the connecting member 122 further includes: a first adaptor portion 122c. The first adaptor portion 122c is connected between the first connecting portion 122a and the second connecting portion 122b. By adopting the arrangement of the second adaptor portion 132c, the second connecting portion 122b and the first connecting portion 122a may be rendered at different heights, and in turn make each of the pull beams 140 sink relative to the first cross beam 120, thereby reducing the risk that the battery pack 200 is collided on the side of the first cross beam 120.

Furthermore, in order to reduce deformation of the connecting member 122 caused by the weight of the battery pack 200, both ends of the first adaptor portion 122c are also connected to the installation portions 111 of the two cantilever beams 110 respectively, thereby improving the robustness of the connecting member 122.

In some possible embodiments, referring to FIG. 1 to FIG. 5, the first adaptor portion 122c is bent and disposed relative to the first connecting portion 122a and the second connecting portion 122b.

In some embodiments of the present application, referring to FIG. 1 to FIG. 5, the second cross beam 130 includes a reinforcing pipe member 131 and a fixing member 132.

The reinforcing pipe member 131 is connected between the support portion 112 of the two cantilever beams 110; the fixing member 132 has a first fixing portion 132a connected to the reinforcing pipe member 131 and a second fixing portion 132b connected to each of the pull beams 140.

It can be understood that the reinforcing pipe 131 may be a rectangular pipe, which can withstand a large load, but is not conducive to being connected to the pull beam 140. If each of the pull beams 140 is directly welded to the reinforcing pipe 131, additional tooling is required to assist in positioning the two members, and the assembly efficiency is low.

Based on the above considerations, by providing a fixing member 132, the fixing member 132 has a first fixing portion 132a and a second fixing portion 132b respectively adapted to position with the reinforcing pipe member 131 and the pull beam 140, and the assembly efficiency of the pull beam 140 and the second cross beam 130 is improved.

In some embodiments of the present application, referring to FIG. 1 to FIG. 5, the fixing member 132 further includes: a second adaptor portion 132c. The second adaptor portion 132c is connected between the first fixing portion 132a and the second fixing portion 132b. By adopting the arrangement of the second adaptor portion 132c, the second fixing portion 132b and the first fixing portion 132a may be at different heights which in turn cause the pull beam 140 to sink relative to the second cross beam 130, thereby reducing the risk that the battery pack 200 is collided on the side of the second cross beam 130.

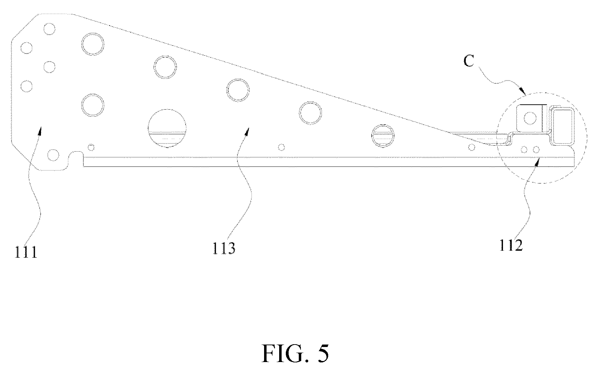

In some embodiments of the present application, referring to FIG. 5 and FIG. 6, the support portion 112 is formed with a boss 112a, and at least part of the second adaptor portion 132c overlaps the boss 112a. By arrangement of the boss 112a, the support portion 112 can provide support for the end of the second adaptor portion 132c, thereby improving the robustness of the fixing member 132.

In some embodiments of the present application, the ends of the second fixing portion 132b and the second adaptor portion 132c may also be welded to the support portion 112.

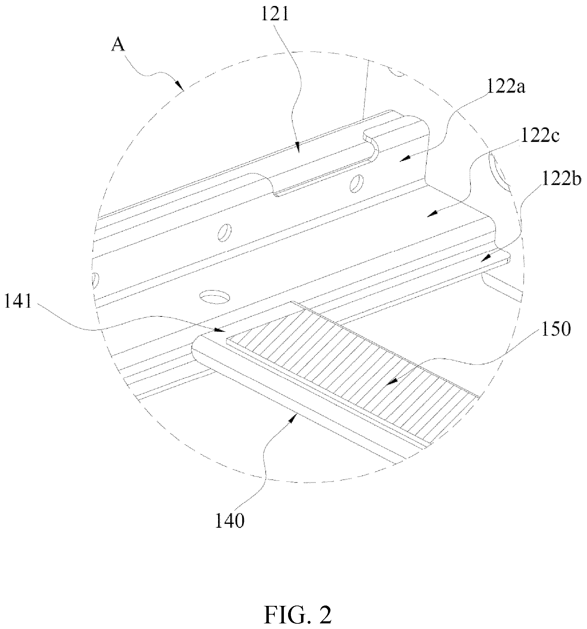

In some embodiments of the present application, referring to FIG. 1 and FIG. 2, the battery pack bracket 100 further includes a flexible member 150. The flexible member 150 is disposed on the support surface 141 of the pull beam 140, and the flexible member 150 is disposed to provide a buffer between the supporting platform 100a and the battery pack 200. By arrangement of the flexible member 150, the vibration received by the battery pack bracket 100 can be buffered, thereby reducing the impact on the battery pack 200.

In some possible embodiments, the flexible member 150 may be made of materials such as rubber and silica gel.

As for the battery pack bracket provided by the present application, the main body of the battery pack bracket is constituted by a supporting platform and two cantilever beams, and the operable space when installing the battery pack is increased by gradually reducing the width of at least part of the cantilever beam in the second direction in the direction away from the connecting structure; on the basis of setting the width of the above cantilever beam to facilitate the installation of the battery pack, the cantilever beam includes a bottom plate and two side plates, and a plurality of connecting bodies are connected between the two side plates. The adoption of such a cantilever beam structure can improve the structural strength of the cantilever beam and ensure the stability of the battery pack. Therefore, the battery pack bracket provided by the present application can take into account both structural strength and installation convenience.

### Embodiment 2

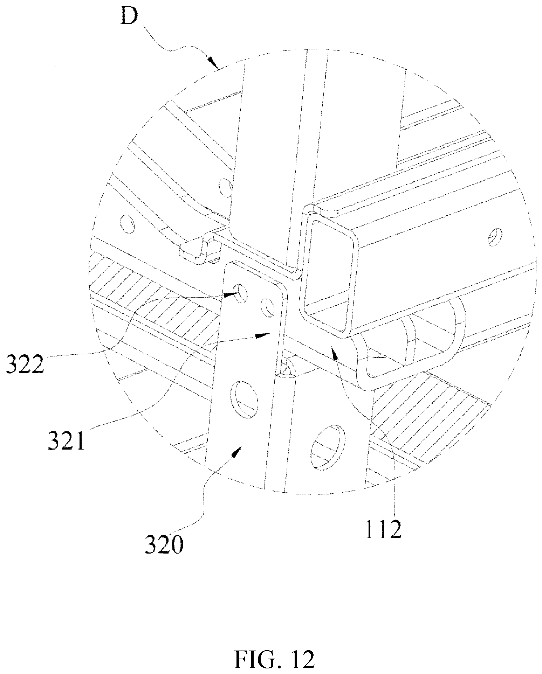

Referring to FIG. 9 to FIG. 14, the embodiment of the present application provides a bracket assembly 10, including a plurality of battery pack brackets 100 as described above; the plurality of battery pack brackets 100 are stacked and disposed along the second direction. That is, the battery pack brackets 100 are disposed in multiple layers in the up and down direction, and each layer of battery pack brackets 100 may respectively place a battery pack 200.

In some embodiments of the present application, referring to FIG. 9 to FIG. 14, the bracket assembly 10 further includes: a first support beam 310 and a second support beam 320.

The first support beam 310 extends along the second direction, and the plurality of battery pack brackets 100 are respectively connected to the first support beam 310 through a connecting structure; that is, the first support beam 310 connects the plurality of battery pack brackets 100 into an integral body.

It can be understood that the first support beam 310 here serves as the above described external structure.

The second support beam 320 is supported between two adjacent battery pack brackets 100; the second support beam 320 and the first support beam 310 are disposed at intervals in the third direction. By arrangement of the second support beam 320, the battery pack bracket 100 is supported at different positions in the third direction, thereby improving the stability of the battery pack bracket 100.

In some embodiments of the present application, referring to FIG. 9 to FIG. 14, the second support beam 320 is connected between the support portions 112 of two adjacent cantilever beams 110 in the second direction.

An auxiliary support is provided to the support portion 112 located at the upper layer by the second support beam 320, thereby connecting the support portions 112 at different layers in the second direction into an integral body and improving the overall structural strength of the bracket assembly 10.

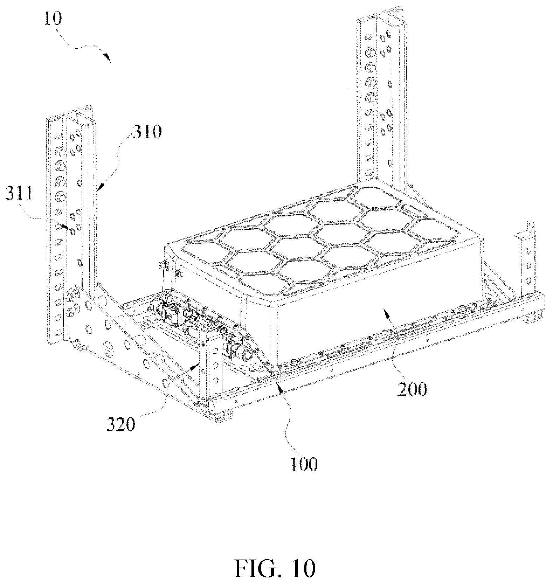

In some embodiments of the present application, referring to FIG. 10 to FIG. 12, a side wing 321 is further provided at the end of the second support beam 320, and the side wing 321 is provided with a fixing hole 322, so that the side wing 321 may be fixedly connected to the support portion 112 of the cantilever beam 110 at the upper layer by a bolt, thereby facilitating the assembly of the battery pack brackets 100 at the upper and lower layers.

In some embodiments of the present application, referring to FIG. 1 and FIG. 9 to FIG. 14, the connecting structure is constructed as a first connecting hole 111a, and the first support beam 310 has a second connecting hole 311 fitting with the first connecting hole 111a.

The bracket assembly 10 further includes a fastening bolt 330. The fastening bolt 330 is penetrated through the first connecting hole 111a and the second connecting hole 311 to fix the battery pack bracket 100 and the first support beam 310.

By connecting the battery pack bracket 100 to the first support beam 310 by the fastening bolt 330, it is convenient to adjust the flatness of the support surface 141 in the battery pack bracket 100.

In some possible embodiments, each layer of the battery pack brackets 100 is pre-assembled before being connected to the first support beam 310. During installation, each layer of battery packs 200 may be assembled with each layer of the battery pack brackets 100 firstly, and then the battery pack 200 and the battery pack bracket 100 are installed as a whole to the first support beam 310. During the installation process, the battery pack bracket 100 may be fine-tuned according to the horizontal value of the battery pack 200, and the battery pack bracket 100 and the first support beam 310 are locked with the fastening bolt 330 after reaching the designed horizontal value; or, a layer of battery pack bracket 100 may be installed to the first support beam 310 firstly, and then the battery pack 200 may be assembled with the battery pack bracket 100 at this layer. Then the battery pack bracket 100 of the upper layer is installed, and so on and so forth, to achieve multi-layer assembly.

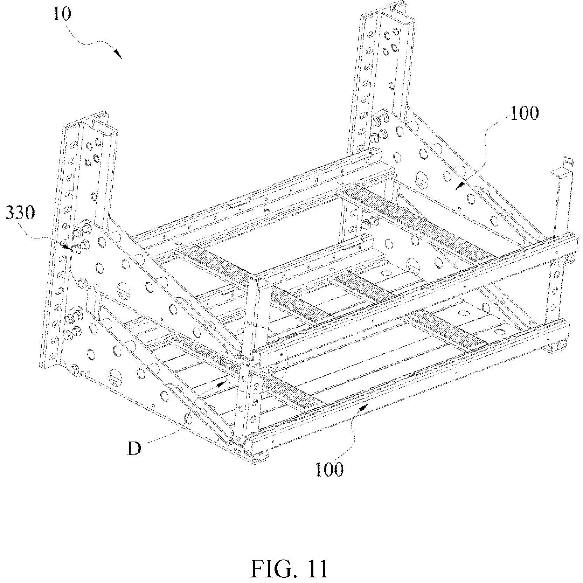

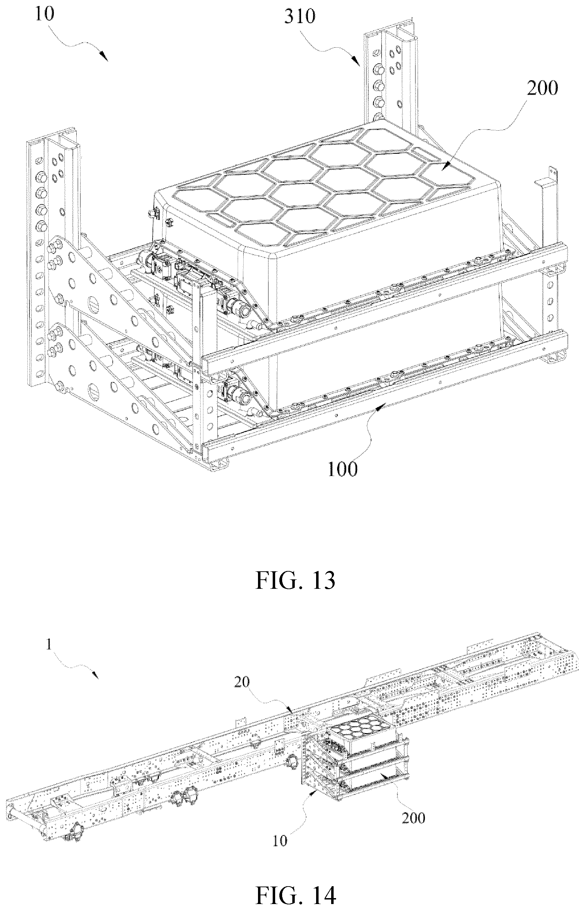

Referring to FIG. 9 to FIG. 14, the embodiment of the present application exemplarily describes the assembly process of the bracket assembly 10 and the battery pack 200:
1) Referring to FIG. 9, the battery pack bracket 100 of the first layer is preassembled and mounted to the first support beam 310;
2) Referring to FIG. 10, the first battery pack 200 is mounted on the battery pack bracket 100 of the first layer;
3) Referring to FIG. 11, the battery pack bracket 100 of the second layer is pre-assembled and mounted to the first support beam 310 (the present step mainly shows the installation of the battery pack bracket 100, and the battery pack 200 is not shown);
4) Referring to FIG. 13, the second battery pack 200 is mounted to the battery pack bracket 100 of the second layer;
5) And so on and so forth to achieve the installation of the battery pack 200 with a preset number of layers.

### Embodiment 3

Referring to FIG.14, an embodiment of the present application provides a vehicle 1, including a vehicle frame 20 and the above bracket assembly 10; the bracket assembly 10 is mounted to the vehicle frame 20.

### Description of reference numerals:

100, Battery pack bracket; 110, Cantilever beam; 110a, Bottom plate; 110b, Side plate; 110c, Connecting body; 110d, Reinforcing rib; 111, Installation portion; 111a, First connecting hole; 112, Support portion; 112a, Boss; 113, Transition portion; 100a, Supporting platform; 120, Cross beam; 121, Load-bearing pipe member; 122, Connecting member; 122a, First connecting portion; 122b, Second connecting portion; 122c, First adaptor portion; 130, Second cross beam; 131, Reinforcing pipe member; 132, Fixing member; 132a, First fixing portion; 132b, Second fixing portion; 132c, Second adaptor part; 140, Pull beam; 141, Supporting surface; 150, Flexible member; 200, Battery pack; 10, Bracket assembly; 310, First support beam; 320, Second support beam; 321, Side wing; 322, Fixing hole; 311, Second connecting hole; 330, Fastening bolt; 1, Vehicle; 20, Vehicle frame.

## Claims

1. A battery pack bracket (100), **characterized by** comprising:
a supporting platform (100a), configured to install a battery pack (200); and
at least two cantilever beams (110), disposed at intervals on both sides of the supporting platform (100a) along a first direction;
wherein, the supporting platform (100a) is fixedly connected to the two cantilever beams (110) respectively; an end of each of the two cantilever beams (110) has a connecting structure for being connected to an external structure; a width of at least a portion of each of the two cantilever beams (110) in a second direction gradually decreases in a direction away from the connecting structure; each of the two cantilever beams (110) comprises a bottom plate (110a) and two side plates (110b), wherein the bottom plate (110a) extends along a third direction, the two side plates (110b) are fixedly connected to two sides of the bottom plate (110a) in the first direction respectively, and a plurality of connecting bodies (110c) are connected between the two side plates (110b).

2. The battery pack bracket (100) according to claim 1, **characterized in that** each of the two cantilever beams (110) comprises:
an installation portion (111), provided with the connecting structure, wherein the installation portion (111) is fixedly connected to a first side of the supporting platform (100a);
a support portion (112), fixedly connected to a second side of the supporting platform (100a); and
a transition portion (113), connected between the installation portion (111) and the support portion (112);
wherein, the installation portion (111) comprises the two side plates (110b), and the support portion (112) and the transition portion (113) both comprise the bottom plate (110a) and the two side plates (110b).

3. The battery pack bracket (100) according to claim 2, **characterized in that** a width of the transition portion (113) in the second direction gradually decreases in a direction away from the installation portion (111); and/or
each of the two cantilever beams (110) further comprises:
a reinforcing rib (110d), extending from the transition portion (113) to the support portion (112);
wherein, the reinforcing rib (110d) is fixedly connected to the bottom plate (110a).

4. The battery pack bracket (100) according to claim 3, **characterized in that** the reinforcing rib (110d) is disposed between the two side plates (110b), and at least a part of the connecting bodies (110c) is disposed to penetrated through the reinforcing rib (110d).

5. The battery pack bracket (100) according to any one of claims 2 to 4, **characterized in that** the supporting platform (100a) comprises:
a first cross beam (120), fixedly connected to the installation portion (111) of the two cantilever beams (110) respectively;
a second cross beam (130), fixedly connected to the support portion (112) of the two cantilever beams (110) respectively; and
a plurality of pull beams (140), configured to provide a support surface (141) for supporting a battery pack (200), wherein the plurality of pull beams (140) are disposed at intervals along the first direction;
wherein, a first end of each of the pull beams (140) is fixedly connected to the first cross beam (120), and a second end of each of the pull beams (140) is fixedly connected to the second cross beam (130), and/or
wherein, a thickness of the bottom plate (110a) ranges from 5.0 mm to 10.0 mm; and/or a thickness of each of the side plates (110b) ranges from 5.0 mm to 10.0 mm.

6. The battery pack bracket (100) according to claim 5, **characterized in that** the first cross beam (120) comprises:
a load-bearing pipe member (121), connected between the installation portion (111) of the two cantilever beams (110); and
a connecting member (122), comprising a first connecting portion (122a) connected to the load-bearing pipe member (121) and a second connecting portion (122b) connected to the pull beam (140); and/or
wherein the second cross beam (130) comprises:
a reinforcing pipe member (131), connected between the support portion (112) of the two cantilever beams (110); and
a fixing member (132), comprising a first fixing portion (132a) connected to the reinforcing pipe member (131) and a second fixing portion (132b) connected to the pull beam (140), and/or
the battery pack bracket (100) further comprises:
a flexible member (150), configured to provide a buffer between the supporting platform (100a) and the battery pack (200);
wherein, the flexible member (150) is disposed on the supporting surface (141) of the pull beam (140).

7. The battery pack bracket (100) according to claim 6, **characterized in that** the connecting member (122) further comprises:
a first adaptor portion (122c), connected between the first connecting portion (122a) and the second connecting portion (122b).

8. The battery pack bracket (100) according to claim 7, **characterized in that** two ends of the first adaptor portion (122c) are further connected to the installation portion (111) of the two cantilever beams (110) respectively.

9. The battery pack bracket (100) according to claim 7, **characterized in that** the first adaptor portion (122c) is disposed to bend relative to the first connecting portion (122a) and the second connecting portion (122b) respectively.

10. The battery pack bracket (100) according to claim 5, **characterized in that** the fixing member (132) further comprises:
a second adaptor portion (132c), connected between the first fixing portion (132a) and the second fixing portion (132b);
wherein, the support portion (112) is formed with a boss (112a), and at least part of the second adaptor portion (132c) overlaps the boss (112a).

11. A bracket assembly (10), **characterized by** comprising a plurality of battery pack brackets, wherein each of the battery pack brackets is the battery pack bracket (100) according to any one of claims 1 to 10;
wherein, the plurality of the battery pack brackets (100) are disposed to stack along the second direction.

12. The bracket assembly (10) according to claim 11, **characterized in that** the bracket assembly (10) further comprises:
a first support beam (310), extending along the second direction, wherein the plurality of battery pack brackets (100) are respectively connected to the first support beam (310) via the connecting structure; and
a second support beam (320), supported between two adjacent two ones of the battery pack brackets (100);
wherein, the second support beam (320) and the first support beam (310) are disposed at intervals in the third direction.

13. The bracket assembly (10) according to claim 12, **characterized in that** the cantilever beam (110) comprises:
an installation portion (111), provided with the connecting structure, and the installation portion (111) is fixedly connected to the first side of the supporting platform (100a);
a support portion (112), fixedly connected to the second side of the supporting platform (100a); and
a transition portion (113), connected between the installation portion (111) and the support portion (112);
wherein, the second support beam (320) is connected between the support portion (112) of two adjacent cantilever beams (110) in the second direction; and/or
wherein the connecting structure is configured as a first connecting hole (111a), and the first support beam (310) has a second connecting hole (311) fitting with the first connecting hole (111a);
the bracket assembly (10) further comprises:
a fastening bolt (330), penetrated through the first connecting hole (111a) and the second connecting hole (311) to fix the battery pack bracket (100) and the first support beam (310).

14. The bracket assembly (10) according to claim 13, **characterized in that** the second support beam (320) comprises:
a side wing (321), configured to be fixedly connected to the support portion (112) of the cantilever beam (110) of an upper layer;
wherein, the side wing (321) is located at an end portion of the second support beam (320).

15. A vehicle (1), **characterized by** comprising a vehicle frame (20) and the bracket assembly (10) according to any one of claims 11 to 14; wherein the bracket assembly (10) is mounted to the vehicle frame (20).
